# EUROPÄISCHE PATENTSCHRIFT

(11) **EP 4 454 721 B1**
(45) Veröffentlichungstag und Bekanntmachung des Hinweises auf die Patenterteilung: **17.06.2026**
(21) Anmeldenummer: 24171847.7
(22) Anmeldetag: 23.04.2024
(51) Int. Cl.: A63B 7/00, A63B 21/16

(54) **BEFESTIGUNGSVORRICHTUNG ZUR AUFHÄNGUNG EINES SPORTGERÄTES**
FASTENING DEVICE FOR SPORTS EQUIPMENT
DISPOSITIF DE FIXATION POUR UN APPAREIL DE SPORT

(30) Priorität: 26.04.2023 DE 102023110647
(43) Veröffentlichungstag der Anmeldung: 30.10.2024
(73) Patentinhaber: Kock, Soenke, 25560 Schenefeld (DE)
(72) Erfinder: Kock, Soenke, 25560 Schenefeld (DE); Bies, Anneke, 25560 Schenefeld (DE)
(74) Vertreter: Weidner Stern Jeschke

(56) Entgegenhaltungen:
- DE-U1- 29 615 002
- US-A1- 2018 221 710
- US-A1- 2022 000 265
- US-B2- 6 626 623
- US-B2- 6 644 901

## Beschreibung

Die Erfindung betrifft eine Sportgerätebefestigungsvorrichtung und ein Sportgerätemontageset.

Zur Aufhängung von Sportgeräten, z.B. Turnringen, sind beispielsweise Deckenhaken bekannt. Zum Auf- und Abhängen von Sportgeräten an Deckenhaken werden zumeist Hilfsmittel, wie zum Beispiel Leitern, benötigt. Weiter sind Schienensysteme zur Aufhängung von Sportgeräten bekannt. Es sind deckenmontierte Schienensysteme bekannt, welche entlang der Decke verschiebbar sind. Weiter sind Schienensysteme bekannt, welche an einer Wand verschiebbar sind. Die Schienensysteme weisen zumeist Läufer auf, an welchen insbesondere Sportgeräte befestigt sind oder befestig werden können. Die Läufer lassen sich von Hand oder mittels einer Stange an der Schiene verschieben.

Während einer Nutzung des Sportgeräts, muss der Läufer insbesondere sicher arretiert sein. Zur Arretierung eines Läufers an einer Schiene sind im Wesentlichen zwei Lösungen bekannt. Zum einen sind Lochungen der Schiene in regelmäßigen Abständen bekannt. Der Läufer weist dabei insbesondere Drehspannriegel oder ähnliches zur Arretierung in den Lochungen auf. Weiter sind Läufer mit Verspannschrauben bekannt. Hier weist die Schiene keine Rasterung auf. Die Arretierung des Läufers an der Schiene erfolgt per Kraftschluss mittels der Verspannschrauben.

Zur Sicherung vor Herunterrutschen von der Schiene, ist zumeist eine Sicherungseinrichtung an der Schiene angeordnet. Bekannte Sicherungselemente sind insbesondere Endstopper, welche als Zusatzelemente auf die Enden der Schiene aufgesetzt werden und zumeist gummiartig sind. Bei Deckenhaken als Sportgerätebefestigungsvorrichtung weisen die Sportgeräte häufig selbstsichernde Elemente auf, wie z.B. Karabinerhaken oder zusätzliche Gewinde-Mutter-basierte Sicherungsmittel.

Bei den bestehenden Lösungen erfordert ein Lösen der Arretierung des Läufers auf der Schiene zumeist eine komplexe z.B. Drehbewegung mittels einer Stange oder einem ähnlichen Hilfsmittel. Zum Ändern der Position muss bei Schienensystemen zumeist eine Schubbewegung bis zu einer exakten Positionierung an einer vordefinierten Position auf den Läufer aufgebracht werden. Zum Ändern der Position bei Deckenhaken müssen weitere Deckenhaken vorliegen oder montiert werden und die Befestigungsmittel entsprechend an diesen angeordnet werden. Letztlich muss zur Arretierung unter Beibehaltung der exakten Positionierung eine Sicherung eingebracht werden und/oder eine Verdrehung der Spannschrauben erfolgen.

Die US 2022/0000265 A1 offenbart eine Wandbefestigung oder Deckenbefestigung für einen Korb oder ein regalbrettähnliches Drahtgeflecht.

In der US 2018/0221710 A1 ist eine an einer Decke montierbare Halterung für ein Sportgerät offenbart, welche Nuten aufweist. Das Halteelement weist prismaähnliche Struktur an einer oberen Halteplatte des Halteelements auf, welche bodenwärts abragend in die Nuten der Halterung anordnenbar sind.

Die US 6,644,901 B2 offenbart eine Befestigungsvorrichtung mit einer Schiene und einem Halteelement mit einer Öse zum Halten von einem Sportfahrzeug, wobei die Schiene bodenwärts orientiert geöffnet ist.

In der US 6,626,623 B2 ist ein Haltesystem zur deckenseitigen Montage offenbart, welches eine Schiene mit Lochung und ein steckbares Halteelement aufweist.

Es ist somit keine Sportgerätebefestigungsvorrichtung bekannt, welche eine einfache Positionsänderung und Sicherung des Läufers an der Schiene ermöglicht.

Folglich wurde vorliegend der Bedarf erkannt, eine Sportgerätebefestigungsvorrichtung bereitzustellen, welche eine sichere Fixierung eines Läufers an einer Schiene sowie eine einfache Änderung der Positionierung des Läufers an der Schiene realisiert.

Aufgabe der Erfindung ist es, den Stand der Technik zu verbessern.

Gelöst wird die Aufgabe durch eine Sportgerätebefestigungsvorrichtung aufweisend ein Befestigungselement, eine Schiene mit zwei miteinander mittels einer ersten Verbindungsfläche verbundenen parallelen Seitenwangen entlang einer Längserstreckung der Schiene, welche deckenwärts geöffnet orientiert ist, wobei die Schiene zumindest ein Nutenpaar aus zwei einander gegenüberliegend an den Seitenwangen der Schiene angeordnete Nuten aufweist und ein Halteelement mit zwei miteinander mittels einer zweiten Verbindungsfläche verbundenen Seitenwangen entlang einer Längserstreckung des Halteelementes, welches deckenwärts geöffnet orientiert ist, wobei die Längserstreckung des Halteelementes kürzer ist als die Längserstreckung der Schiene und wobei das Halteelement zumindest ein Dornenpaar aus zwei Dornen, welche einander gegenüberliegend an den Seitenwangen des Halteelements angeordnet sind, aufweist, wobei die Dornen einander zugewandt angeordnet sind, wobei die Dornen zu den Nuten derart korrespondieren, dass sie zur Fixierung einer Position des Halteelements an der Schiene in den Nuten arretieren.

Das Sportgerät kann insbesondere ein Sandsack und/oder Turnringe und/oder ein Trapez und/oder ein Seil und/oder ein Tau und/oder Areals und/oder ein Schlingentrainer sein.

Das Befestigungselement kann insbesondere an einer insbesondere horizontal orientierten Decke eines Raumes angeordnet sein. Zusätzlich oder alternativ kann das Befestigungselement zur Anordnung an einer insbesondere vertikal orientierten Wand eines Raumes eingerichtet sein. Schließlich kann das Befestigungselement insbesondere an einer schräg im Raum orientierten Fläche angeordnet sein. Zur Anordnung an einer Fläche / Wand kann das Befestigungselement zu einem an der entsprechenden Fläche / Wand fest montierten Befestigungseinrichtung korrespondieren. Zusätzlich oder alternativ kann das Befestigungselement als Rechteckrohr und/oder Holzbalken ausgeführt sein. Das Rechteckrohr und/oder der Holzbalken kann bevorzugt einen rechteckigen Querschnitt mit z.B. 40 mm und einer Länge von zumindest 120 mm aufweisen. Das Befestigungselement kann insbesondere Bestandteil einer freistehenden Rahmenstruktur sein. Die Rahmenstruktur kann insbesondere Metall und/oder Holz aufweisen. Das Befestigungselement kann Metall aufweisen. Das Befestigungselement kann beispielsweise eine Schraubverbindung sein. Zusätzlich oder alternativ kann das Befestigungselement eine Steckverbindung sein.

Die Schiene kann insbesondere ein U-Profil sein. Zusätzlich oder alternativ kann die Schiene ein Strangpressprofil sein. Die Form der Schiene, welche sich insbesondere durch die mittels der ersten Verbindungsfläche verbundenen parallelen Seitenwangen ergibt, kann insbesondere mittels Abkanten hergestellt sein. Zusätzlich oder alternativ kann die Form mittels Verschweißen der Seitenwangen an der Verbindungsfläche hergestellt sein. Schließlich kann die Schiene mittels Rohrlaser aus einem Vierkantrohr geschnitten sein. Das Vierkantrohr kann bevorzugt eine Wandstärke von 3 mm aufweisen. Die Schiene kann insbesondere Metall aufweisen. Zusätzlich oder alternativ kann die Schiene Kunststoff aufweisen. Die Breite der Schiene beträgt vorzugsweise 5 cm bis 15 cm, besonders bevorzugt 6 cm.

Das zumindest eine Nutenpaar weist insbesondere zwei vorzugsweise einander gegenüberliegend an den Seitenwangen der Schiene angeordnete Nuten auf. Zusätzlich oder alternativ kann an der Schiene oder können an der Schiene eine Vielzahl Nutenpaare angeordnet sein. Die Nutenpaare weisen bevorzugt einen vordefinierten Abstand zueinander auf. Ein bevorzugter Abstand zwischen zwei Nutenpaaren beträgt insbesondere 6 cm bis 10 cm, besonders bevorzugt 8 cm.

Eine Nut eines Nutenpaares hat vorzugsweise eine Tiefe von der Oberkante einer Seitenwange in Richtung der Verbindungsfläche von bevorzugt 3 mm bis 20 mm, besonders bevorzugt 10,5 mm. Zusätzlich oder alternativ hat eine Nut eine Breite entlang der Längserstreckung der Schiene von bevorzugt 2 mm bis 10 mm, besonders bevorzugt 4,3 mm. Die Nuten können an einer Oberkante der Seitenwange eine größere Breite aufweisen als an einem der Oberkante der Seitenwange gegenüberliegend orientierten Ende der Nut.

Das Halteelement kann insbesondere Metall aufweisen. Zusätzlich oder alternativ kann das Halteelement Kunststoff aufweisen. Für die Herstellung der Form des Halteelements, welche sich aus den an der Verbindungsfläche angeordneten Seitenwangen ergibt, gelten dieselben Möglichkeiten wie oben für die Herstellung der Form der Schiene diskutiert. Die Längserstreckung des Halteelements kann insbesondere 5 cm bis 12 cm, besonders bevorzugt 9,3 cm betragen. Die Breite des Halteelements beträgt vorzugsweise 7 cm bis 11 cm, besonders bevorzugt 8,8 cm. Die Breite des Halteelements korrespondiert vorzugsweise zu einer Breite der Schiene derart, dass das Halteelement die Schiene von außen dreiseitig umschließt und/oder an der Schiene entlang der Längserstreckung der Schiene frei beweglich ist und/oder die an dem Halteelement angeordneten Dornen die Oberkante der Seitenwangen der Schiene nach innen orientiert überdecken. Das Halteelement kann zusätzlich Führungselemente zur Führung des Halteelements an der Schiene aufweisen. Die Führungselemente realisieren bevorzugt eine reibungsarme Führung und können hierfür schräge Flächen in Richtung der Verschieberichtung aufweisen. Die Führungselemente können Metall aufweisen. Zusätzlich oder alternativ können die Führungselemente Kunststoff, z.B. Polyoxymethylen aufweisen.

Das Halteelement kann das Dornenpaar oder eine Vielzahl Dornenpaare aufweisen. Das Dornenpaar oder die Dornenpaare kann oder können jeweils aus dem Halteelement insbesondere zweiseitig herausgeschnittene Materiallaschen sein, welche zum Beispiel mittels Abkantung vorzugsweise rechtwinklig zur Seitenwange nach innen gebogen sind. Zusätzlich oder alternativ kann ein Dornenpaar oder eine Vielzahl Dornenpaare fest mit dem Halteelement verbunden sein und z.B. Metallstifte aufweisen. Zusätzlich oder alternativ kann das Halteelement mit einem oder einer Vielzahl Dornenpaarvorrichtungen, welche jeweils ein Dornenpaar oder mehrere Dornenpaare aufweisen, verbunden sein. Eine Dornenpaarvorrichtung kann zusätzlich oder alternativ insbesondere ein Verbindungselement aufweisen, welches zur Anordnung der Dornenpaarvorrichtung an dem Halteelement eingerichtet ist. Ein Dorn kann insbesondere zylindrisch und/oder flächig ausgeführt sein. Die Form des Dorns kann entlang seiner Längserstreckung variieren. Ein Dorn hat vorzugsweise eine Breite von bevorzugt 0,2 cm bis 0,8 cm, bevorzugt 0,4 cm und/oder eine Höhe von bevorzugt 1 cm bis 1,5 cm, besonders bevorzugt 1,2 cm und/oder eine Länge von bevorzugt 0,5 cm bis 2 cm, besonders bevorzugt 1,5 cm. An einem Ende eines Dorns kann zusätzlich oder alternativ eine Aufwölbung in Höhenrichtung angeordnet sein, welche insbesondere in Richtung der Verbindungfläche orientiert ist und insbesondere ein seitliches unbeabsichtigtes Ablösen des Halteelements von der Schiene hemmt. Die Aufwölbung kann bevorzugt eine Länge von 4 mm bis 6 mm, besonders bevorzugt 5 mm und eine im Wesentlichen doppelt so große Höhe, wie die Höhe des Dorns, besonders bevorzugt eine Höhe von 1,9 cm aufweisen.

Die Dornen eines Dornenpaars sind vorzugsweise einander gegenüberliegend an den Seitenwangen des Halteelements angeordnet. Besonders bevorzugt weist ein Halteelement zwei Dornenpaare auf. Die zwei Dornenpaare haben besonders bevorzugt einen vordefinierten Abstand zueinander, welcher zu einem Abstand einer Vielzahl Nutenpaare an der Schiene korrespondiert. Ein bevorzugter Abstand zwischen zwei Dornenpaaren entlang der Längserstreckung des Halteelements beträgt insbesondere 6 cm bis 10 cm, besonders bevorzugt 8 cm. Derart greift ein Dornenpaar oder greifen eine Mehrzahl Dornenpaare in einer Arretierposition in jeweils ein Nutenpaar oder mehrere Nutenpaare der Schiene ein.

Während einer Verschiebung des Halteelements entlang der Längserstreckung der Schiene können die Dornen der Dornenpaare oder des Dornenpaares als Führungselemente dienen. Hierbei gleitet mit anderen Worten das Dornenpaar oder die Dornenpaare auf der Oberfläche der Seitenwangen der Schiene entlang. Zusätzlich oder alternativ kann an der Verbindungsfläche zwischen den Seitenwangen des Halteelements ein Führungselement angeordnet sein, mittels welchem das Halteelement an der Schiene während einer Positionsänderung geführt wird und/oder mittels welchem das Halteelement an der Schiene während einer Positionsänderung entlanggleitet. Die Positionsänderung endet im Allgemeinen, wenn das Halteelement eine gewünschte vordefinierten Position, welche durch die Position der Nutenpaare oder des Nutenpaars definiert ist, erreicht. An dieser Position greifen die Dornen unter einer Änderung der Höhe, insbesondere Absenken, des Halteelements in die Nuten ein. An dieser Position ist das Halteelement so lange fixiert, bis es durch einen Nutzer nach oben aus dem Nutenpaar oder den Nutenpaaren herausgehoben wird und mittels einer Bewegung entlang der Längserstreckung der Schiene auf der Schiene verschieblich ist.

An der Verbindungsfläche des Halteelements kann insbesondere ein Verbindungselement für das Sportgerät angeordnet sein. Das Verbindungselement kann beispielsweise eine Augplatte sein. Zusätzlich oder alternativ kann das Verbindungselement ein Gewinde sein. Schließlich kann das Verbindungselement beispielsweise ein Karabiner sein.

Die Schiene weist vorzugsweise an einem Anfang der Längserstreckung der Schiene und/oder an einem Ende der Längserstreckung der Schiene eine Sicherungseinrichtung auf. Die Sicherungseinrichtung ist insbesondere zum Verhindern einer ungewollten Ablösung des Halteelements von der Schiene eingerichtet. Die Sicherungseinrichtung kann insbesondere eine Kontur sein, welche die Schiene aufweist. Die Kontur kann insbesondere eine Vertiefung aufweisen, in welche insbesondere ein Dornenpaar eindringt. Die Kontur kann weiter einen Rücksprung aufweisen, welcher ein Herausspringen des Dornenpaares in Richtung des Endes der Schiene an welchem die Sicherungseinrichtung angeordnet ist, verhindert.

Ein wesentlicher Gedanke der Erfindung beruht darauf, dass eine Position eines Sportgeräts an einer Deckenhalterung geändert werden kann und mit geringem Aufwand sicher an einer Arretierposition arretiert wird.

Vorteilhafte Ausgestaltungen ergeben sich aus den Unteransprüchen.

Gemäß einem zweiten Aspekt wird die Aufgabe gelöst durch ein Sportgerätmontageset, aufweisend eine Sportgerätebefestigungsvorrichtung nach einem der Ansprüche 1 bis 9, eine Deckenvorrichtung, welche zur Aufnahme der Befestigungseinrichtung an einer Innenraumdecke insbesondere eines Gebäudes eingerichtet ist und eine Verschiebestange zum Herauslösen eines in einem Nutenpaar einer Schiene der Sportgerätebefestigungsvorrichtung arretierten Halteelements und zum Verschieben des Halteelements auf der Schiene der Sportgerätebefestigungsvorrichtung. Zusätzlich oder alternativ kann das Sportgerätemontageset Montagemittel, wie zum Beispiel Schrauben, aufweisen.

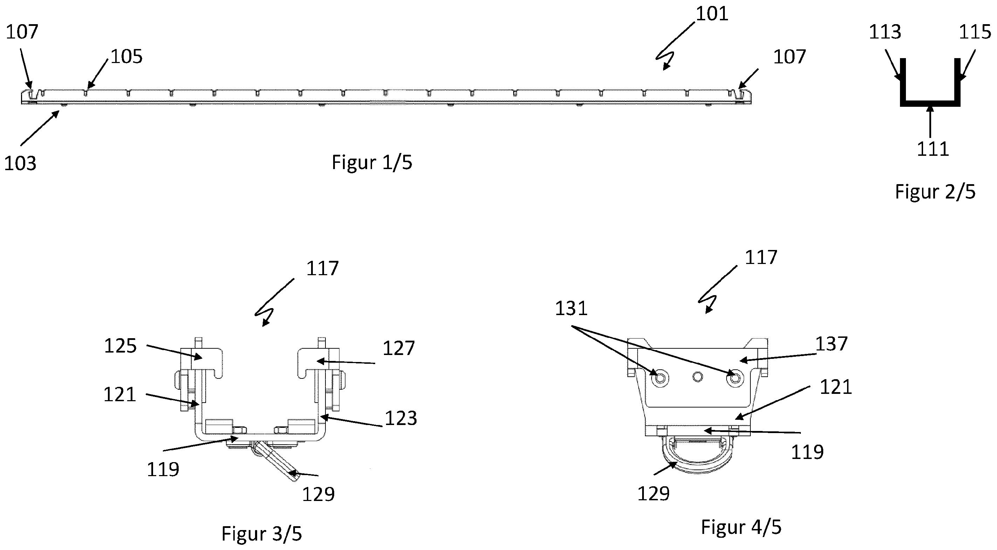

Im Weiteren wird die Erfindung anhand von Ausführungsbeispielen näher erläutert. Es zeigen
- Figur 1: eine schematische Darstellung einer Seitenansicht einer erfindungsgemäßen Schiene,
- Figur 2: eine schematische Darstellung einer Frontalansicht einer erfindungsgemäßen Schiene,
- Figur 3: eine schematische Frontalansicht einer erfindungsgemäßen Halterung,
- Figur 4: eine Seitenansicht einer erfindungsgemäßen Halterung und

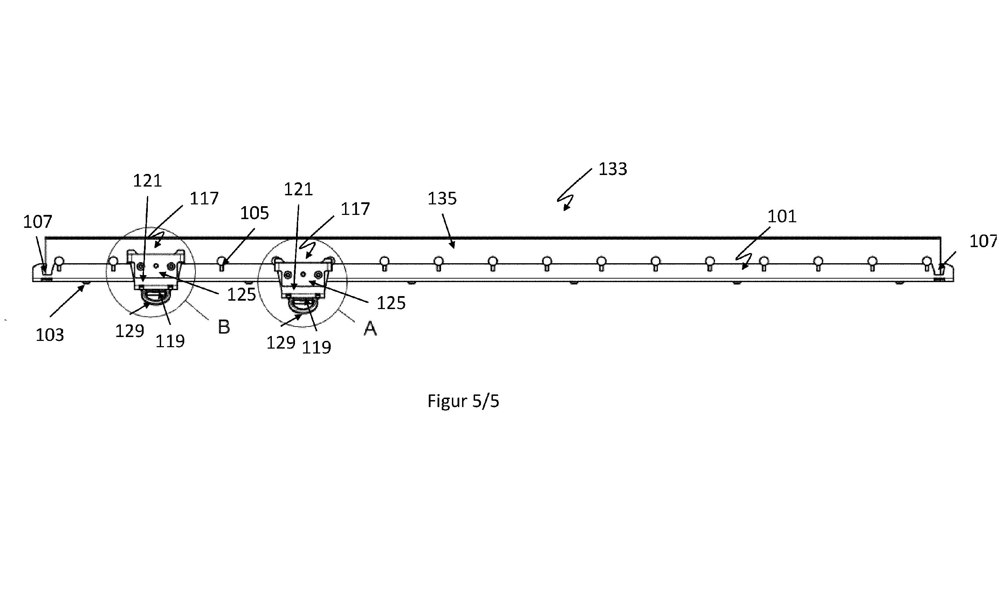

- Figur 5: eine schematische Darstellung einer Seitenansicht einer erfindungsgemäßen Sportgerätehalterung mit zwei Positionierungen der Halterung.

Eine U-Schiene 101 weist eine erste Verbindungsfläche 111 sowie senkrecht dazu angeordnet eine erste Seitenwange 113 und eine zweite Seitenwange 115 auf. An der zweiten Seitenwange 115 sind eine Vielzahl Nuten 105 angeordnet. An der ersten Seitenwange 113 sind parallel zu der Vielzahl Nuten 105 an der zweiten Seitenwange 115 weitere Nuten (nicht dargestellt) angeordnet. Die jeweilig parallel zueinander angeordneten Nuten bilden jeweils ein Nutenpaar. Die U-Schiene 101 weist an der ersten Verbindungsfläche 111 eine Vielzahl Bohrlöcher 103 auf. Unter Verwendung der Bohrlöcher 103 wird die U-Schiene 101 mit Schrauben an einer Deckenhalterung 135 montiert. Die Sportgerätehalterung 133 sei mittels der Deckenhalterung 135 an einer Decke eines Gebäudes montiert. Die U-Schiene 101 weist an einem ersten Ende der Längserstreckung der U-Schiene 101 und einem zweiten Ende der U-Schiene 101 jeweils eine Sicherungsposition 107 auf. Ein Halteelement 117 weist eine zweite Verbindungsfläche 119 auf, welche mit einer dritten Seitenwange 121 und einer vierten Seitenwange 123 verbunden ist. An der dritten Seitenwange 121 ist ein erster Dorn 125 angeordnet. An der vierten Seitenwange 123 ist ein zweiter 127 Dorn angeordnet. Der erste Dorn 125 ist ein Element einer ersten Klammerungseinheit 137. Die erste Klammerungseinheit 137 weist einen dritten Dorn (nicht dargestellt) auf. Der zweite Dorn 127 ist ein Element einer zweiten Klammerungseinheit (nicht dargestellt). Auch die zweite Klammerungseinheit weist einen weiteren Dorn auf. Der erste Dorn 125 und der zweite Dorn 127 ergeben gemeinsam ein Dornenpaar. Weiter ist am Halteelement eine Ringöse 129 angeordnet. An der Ringöse 129 kann ein Sportgerät angeordnet werden. Die erste Klammerungseinheit 137 ist mit zwei Verbindungselementen 131 an der dritten Seitenwange 121 des Halteelementes 117 angeordnet. Während einer Arretierung liegt das Halteelement 117 in einer Arretierposition A vor. Hierbei greift das Dornenpaare mit dem ersten Dorn 125 in ein erstes Nutenpaar und das Dornenpaar mit dem zweiten Dorn 127 in ein neben dem ersten Nutenpaar angeordnetes zweites Nutenpaar 105 ein. Während des Verschiebens B des Halteelements 117 wird dieses von einem Nutzer deckenwärts angehoben, so dass das Dornenpaar 125, 127 nicht mehr im Eingriff eines Nutenpaares ist 105, bis das Halteelement 117 vom Nutzer an einer neuen gewünschten Position herabgesenkt und das Dornenpaar 125, 127 in ein gewünschtes Nutenpaar 105 an den Seitenwangen 113, 115 der U-Schiene 101 eingelassen wird.

### Bezugszeichenliste

- 101: U-Schiene
- 103: Bohrloch
- 105: Nutenpaar
- 107: Sicherungsposition
- 111: erste Verbindungsfläche
- 113: erste Seitenwange
- 115: zweite Seitenwange
- 117: Halteelement
- 119: zweite Verbindungsfläche
- 121: dritte Seitenwange
- 123: vierte Seitenwange
- 125: erster Dorn
- 127: zweiter Dorn
- 129: Ringöse
- 131: Verbindungselemente
- 133: Sportgerätehalterung
- 135: Deckenhalterung
- 137: erste Klammerungseinheit
- A: Arretierposition
- B: Verschiebeposition

## Patentansprüche

1. Sportgerätebefestigungsvorrichtung (133),aufweisend
- ein Befestigungselement (103),
- eine Schiene (101) mit zwei miteinander mittels einer ersten Verbindungsfläche (111) verbundenen parallelen Seitenwangen (113, 115) entlang einer Längserstreckung der Schiene (101), welche im montierten Zustand deckenwärts geöffnet orientiert ist, wobei die Schiene (101) zumindest ein Nutenpaar (105) aus zwei einander gegenüberliegend an den Seitenwangen (113, 115) der Schiene (101) angeordnete Nuten aufweist
- und ein Halteelement (117) mit zwei miteinander mittels einer zweiten Verbindungsfläche (119) verbundenen parallelen Seitenwangen (121, 123) entlang einer Längserstreckung des Halteelements (117), welches deckenwärts geöffnet orientiert ist, wobei die Längserstreckung des Halteelements (117) kürzer ist, als die Längserstreckung der Schiene (101) und wobei das Halteelement (117) zumindest ein Dornenpaar (125, 127) aus zwei Dornen, welche einander gegenüberliegend an den Seitenwangen (121, 123) des Halteelements (117) angeordnet sind, aufweist, wobei die Dornen (125,127) einander zugewandt angeordnet sind,
und die Dornen (125, 127) zu den Nuten (105) derart korrespondieren, dass sie zur Fixierung einer Position des Halteelements (117) an der Schiene (101) in den Nuten (105) arretieren.

2. Sportgerätebefestigungsvorrichtung (133) nach Anspruch 1, wobei eine Vielzahl Nutenpaare (105) an der Schiene angeordnet sind und die Vielzahl Nutenpaare (105) untereinander einen vordefinierten Abstand entlang der Längserstreckung der Schiene (101), insbesondere einen Abstand von 6 cm bis 9 cm, besonders bevorzugt 8 cm, aufweisen.

3. Sportgerätebefestigungsvorrichtung (133) nach Anspruch 2, wobei das Halteelement (117) zwei Dornenpaare (125, 127) aufweist und ein Abstand der Dornenpaare (125, 127) mit dem Abstand der Nutenpaare (105) untereinander korrespondiert.

4. Sportgerätebefestigungsvorrichtung (133) nach einem der vorstehenden Ansprüche, wobei an einem Anfang der Längserstreckung der Schiene (101) und/oder an einem Ende der Längserstreckung der Schiene (101) eine Sicherungseinrichtung (107) zum Verhindern einer ungewollten Ablösung des Halteelements (117) von der Schiene (101) aufweist.

5. Sportgerätebefestigungsvorrichtung (133) nach einem der vorstehenden Ansprüche, wobei das Dornenpaar (125, 127) als temporär an dem Halteelement (117) angeordnete Klammereinheit (137) ausgeführt ist.

6. Sportgerätebefestigungsvorrichtung (133) nach einem der vorstehenden Ansprüche, wobei die Schiene (101) und/oder das Halteelement (117) und/oder eine Deckenhalterung (135) Metall und/oder Kunststoff aufweist oder aufweisen.

7. Sportgerätebefestigungsvorrichtung (133) nach einem der vorstehenden Ansprüche, wobei die Nuten (105) insbesondere senkrecht an den Seitenwangen (113, 115) der Schiene (101) angeordnet sind und eine vordefinierte Breite und eine vordefinierte Tiefe aufweisen, wobei die Breite der Nuten (105) insbesondere 0,2 cm bis 1 cm, bevorzugt 0,43 cm beträgt und die Tiefe der Nuten (105) insbesondere 0,3 cm bis 2 cm, bevorzugt 10,5 mm beträgt und wobei die Breite der Nuten (105) mit einer Breite der Dornen (125, 127), welche insbesondere 0,1 cm bis 0,8 cm, bevorzugt 0,4 cm beträgt, korrespondiert.

8. Sportgerätebefestigungsvorrichtung (133) nach einem der vorstehenden Ansprüche, wobei an der Verbindungsfläche (119) des Halteelements (117) ein Verbindungselement (129) für das Sportgerät angeordnet ist.

9. Sportgerätebefestigungsvorrichtung (133) nach Anspruch 8, wobei das Verbindungselement (129) eine Augplatte ist.

10. Sportgerätemontageset, aufweisend:
- eine Sportgerätebefestigungsvorrichtung (133) nach einem der Ansprüche 1-9,
- eine Deckenvorrichtung (135), welche zur Aufnahme der Sportgerätebefestigungsvorrichtung (133) an einer Innenraumdecke insbesondere eines Gebäudes eingerichtet ist, und
- eine Verschiebestange zum Herauslösen eines in einem Nutenpaar (105) einer Schiene (101) der Sportgerätebefestigungsvorrichtung (133) arretierten (A) Halteelements (117) und zum Verschieben (B) des Halteelements (117) auf der Schiene (101) der Sportgerätebefestigungsvorrichtung (133).

## Claims

1. Sports equipment fastening device (133), comprising
- a fastening element (103),
- a rail (101) having two parallel side cheeks (113, 115) connected to one another by means of a first connecting surface (111) along a longitudinal extension of the rail (101), which, in the mounted state, is oriented open toward the ceiling, wherein the rail (101) has at least one pair of grooves (105) consisting of two grooves arranged opposite one another on the side cheeks (113, 115) of the rail (101),
- and a retaining element (117) having two parallel side cheeks (121, 123) connected to one another by means of a second connecting surface (119) along a longitudinal extension of the retaining element (117), which is oriented open toward the ceiling, wherein the longitudinal extension of the retaining element (117) is shorter than the longitudinal extension of the rail (101), and wherein the retaining element (117) has at least one pair of prongs (125, 127) consisting of two prongs which are arranged opposite one another on the side cheeks (121, 123) of the retaining element (117), wherein the prongs (125, 127) are arranged facing one another, and the prongs (125, 127) correspond to the grooves (105) in such a way that, for fixing a position of the retaining element (117) on the rail (101), they lock in the grooves (105).

2. Sports equipment fastening device (133) according to claim 1, wherein a plurality of pairs of grooves (105) are arranged on the rail, and the plurality of pairs of grooves (105) have a predefined spacing from one another along the longitudinal extension of the rail (101), in particular a spacing of 6 cm to 9 cm, particularly preferably 8 cm.

3. Sports equipment fastening device (133) according to claim 2, wherein the retaining element (117) has two pairs of prongs (125, 127), and a spacing of the pairs of prongs (125, 127) corresponds to the spacing of the pairs of grooves (105) from one another.

4. Sports equipment fastening device (133) according to any one of the preceding claims, wherein a securing device (107) is provided at a beginning of the longitudinal extension of the rail (101) and/or at an end of the longitudinal extension of the rail (101) for preventing an unintended detachment of the retaining element (117) from the rail (101).

5. Sports equipment fastening device (133) according to any one of the preceding claims, wherein the pair of prongs (125, 127) is embodied as a clamp unit (137) temporarily arranged on the retaining element (117).

6. Sports equipment fastening device (133) according to any one of the preceding claims, wherein the rail (101) and/or the retaining element (117) and/or a ceiling mount (135) comprises or comprise metal and/or plastic.

7. Sports equipment fastening device (133) according to any one of the preceding claims, wherein the grooves (105) are arranged in particular perpendicularly on the side cheeks (113, 115) of the rail (101) and have a predefined width and a predefined depth, wherein the width of the grooves (105) is in particular 0.2 cm to 1 cm, preferably 0.43 cm, and the depth of the grooves (105) is in particular 0.3 cm to 2 cm, preferably 10.5 mm, and wherein the width of the grooves (105) corresponds to a width of the prongs (125, 127), which is in particular 0.1 cm to 0.8 cm, preferably 0.4 cm.

8. Sports equipment fastening device (133) according to any one of the preceding claims, wherein a connecting element (129) for the sports equipment is arranged on the connecting surface (119) of the retaining element (117).

9. Sports equipment fastening device (133) according to claim 8, wherein the connecting element (129) is an eye plate.

10. Sports equipment mounting set, comprising:
- a sports equipment fastening device (133) according to any one of claims 1-9,
- a ceiling device (135), which is configured to receive the sports equipment fastening device (133) on an indoor ceiling, in particular of a building, and
- a displacement rod for releasing a retaining element (117) locked (A) in a pair of grooves (105) of a rail (101) of the sports equipment fastening device (133) and for displacing (B) the retaining element (117) on the rail (101) of the sports equipment fastening device (133).

## Revendications

1. Dispositif de fixation d'équipement sportif (133), comprenant
- un élément de fixation (103),
- un rail (101) comportant deux joues latérales parallèles (113, 115) reliées l'une à l'autre au moyen d'une première surface de liaison (111) le long d'une extension longitudinale du rail (101), lequel, à l'état monté, est orienté ouvert vers le plafond, le rail (101) comportant au moins une paire de rainures (105) constituée de deux rainures disposées en regard l'une de l'autre sur les joues latérales (113, 115) du rail (101),
- et un élément de maintien (117) comportant deux joues latérales parallèles (121, 123) reliées l'une à l'autre au moyen d'une deuxième surface de liaison (119) le long d'une extension longitudinale de l'élément de maintien (117), lequel est orienté ouvert vers le plafond, l'extension longitudinale de l'élément de maintien (117) étant plus courte que l'extension longitudinale du rail (101), et l'élément de maintien (117) comportant au moins une paire d'ergots (125, 127) constituée de deux ergots, lesquels sont disposés en regard l'un de l'autre sur les joues latérales (121, 123) de l'élément de maintien (117), les ergots (125, 127) étant disposés tournés l'un vers l'autre, et les ergots (125, 127) correspondent aux rainures (105) de telle sorte que, pour fixer une position de l'élément de maintien (117) sur le rail (101), ils se verrouillent dans les rainures (105).

2. Dispositif de fixation d'équipement sportif (133) selon la revendication 1, dans lequel une pluralité de paires de rainures (105) sont disposées sur le rail, et la pluralité de paires de rainures (105) présentent entre elles un espacement prédéfini le long de l'extension longitudinale du rail (101), en particulier un espacement de 6 cm à 9 cm, de manière particulièrement préférée 8 cm.

3. Dispositif de fixation d'équipement sportif (133) selon la revendication 2, dans lequel l'élément de maintien (117) comporte deux paires d'ergots (125, 127), et un espacement des paires d'ergots (125, 127) correspond à l'espacement des paires de rainures (105) entre elles.

4. Dispositif de fixation d'équipement sportif (133) selon l'une des revendications précédentes, dans lequel un dispositif de sécurisation (107) est prévu au début de l'extension longitudinale du rail (101) et/ou à une extrémité de l'extension longitudinale du rail (101) pour empêcher un détachement involontaire de l'élément de maintien (117) du rail (101).

5. Dispositif de fixation d'équipement sportif (133) selon l'une des revendications précédentes, dans lequel la paire d'ergots (125, 127) est réalisée sous forme d'une unité d'agrafe (137) disposée temporairement sur l'élément de maintien (117).

6. Dispositif de fixation d'équipement sportif (133) selon l'une des revendications précédentes, dans lequel le rail (101) et/ou l'élément de maintien (117) et/ou un support de plafond (135) comporte ou comportent du métal et/ou du plastique.

7. Dispositif de fixation d'équipement sportif (133) selon l'une des revendications précédentes, dans lequel les rainures (105) sont disposées en particulier perpendiculairement sur les joues latérales (113, 115) du rail (101) et présentent une largeur prédéfinie et une profondeur prédéfinie, la largeur des rainures (105) étant en particulier de 0,2 cm à 1 cm, de préférence de 0,43 cm, et la profondeur des rainures (105) étant en particulier de 0,3 cm à 2 cm, de préférence de 10,5 mm, et la largeur des rainures (105) correspondant à une largeur des ergots (125, 127), laquelle est en particulier de 0,1 cm à 0,8 cm, de préférence de 0,4 cm.

8. Dispositif de fixation d'équipement sportif (133) selon l'une des revendications précédentes, dans lequel un élément de liaison (129) pour l'équipement sportif est disposé sur la surface de liaison (119) de l'élément de maintien (117).

9. Dispositif de fixation d'équipement sportif (133) selon la revendication 8, dans lequel l'élément de liaison (129) est une plaque à œillet.

10. Kit de montage d'équipement sportif, comprenant :
- un dispositif de fixation d'équipement sportif (133) selon l'une des revendications 1 à 9,
- un dispositif de plafond (135), lequel est conçu pour recevoir le dispositif de fixation d'équipement sportif (133) sur un plafond intérieur, en particulier d'un bâtiment, et
- une tige de déplacement destinée à libérer un élément de maintien (117) verrouillé (A) dans une paire de rainures (105) d'un rail (101) du dispositif de fixation d'équipement sportif (133) et à déplacer (B) l'élément de maintien (117) sur le rail (101) du dispositif de fixation d'équipement sportif (133).
